# EUROPÄISCHE PATENTSCHRIFT

(11) **EP 1 319 672 B1**
(45) Veröffentlichungstag und Bekanntmachung des Hinweises auf die Patenterteilung: **27.10.2004**
(21) Anmeldenummer: 02027309.0
(22) Anmeldetag: 06.12.2002
(51) Int. Cl.: C08F 4/60, B01J 31/14, B01J 19/24

(54) **Verfahren zur Herstellung von auf inerten Trägermaterialien immobilisierten Teilhydrolysaten metallorganischer Verbindungen oder Übergangsmetallkatalysatoren**
Method for the production of partial hydrolysates immobilized on inert suppports or of transition metal catalysts
Procede de production d'hydrolysates partiels immobilises sur support inertes ou de catalyseurs metalliques de transition

(30) Priorität: 11.12.2001 DE 10160634
(43) Veröffentlichungstag der Anmeldung: 18.06.2003
(73) Patentinhaber: Crompton GmbH, 59192 Bergkamen (DE)
(72) Erfinder: Rieger, Rainer, Dr., 44534 Lünen (DE); Wendt, Ralf Alexander, Dr., 51381 Leverkusen (DE); Wanke, Thomas, 59368 Werne (DE)

(56) Entgegenhaltungen:
- EP-A- 0 623 624
- EP-A- 0 650 697

## Beschreibung

Die Erfindung betrifft ein Verfahren zur Herstellung von Teilhydrolysaten metallorganischer Verbindungen sowie ein Verfahren zur Herstellung von auf inerten Trägermaterialien immobilisierten Teilhydrolysaten metallorganischer Verbindungen oder Übergangsmetallkatalysatoren sowie die nach diesen Verfahren hergestellten Produkte.

Übergangsmetallkatalysatoren, bestehend aus Übergangsmetallverbindungen und metallorganischen Verbindungen wie Alkylaluminoxanen, insbesondere Methylaluminoxan (MAO), gewinnen zunehmend an Bedeutung als essentieller Bestandteil einer neuen Generation von Katalysatorsystemen zur Herstellung von Polyolefinen ('Single Site Catalysts'). Diese neuen Katalysatoren bestehen im wesentlichen, wie bereits aus der klassischen Ziegler-Natta-Katalyse bekannt, aus einer Übergangsmetallverbindung als Katalysator, sowie einem Alkylaluminoxan als aluminiumorganische Cokatalysator-Komponente. Als Übergangsmetallverbindung werden bevorzugt Cyclopentadienyl-, Indenyl- oder Fluorenylderivate der Gruppe IVa des Periodensystems der chemischen Elemente eingesetzt. Solche Systeme besitzen im Gegensatz zu konventionellen Ziegler-Natta-Katalysatoren neben einer hohen Aktivität und Produktivität nicht nur die Fähigkeit zur gezielten Steuerung der Produkteigenschaften in Abhängigkeit von den eingesetzten Komponenten und den Reaktionsbedingungen, sondern eröffnen darüber hinaus den Zugang zu bislang unbekannten Polymerstrukturen mit vielversprechenden Eigenschaften im Hinblick auf technische Anwendungen.

In der Literatur ist eine Vielzahl von Publikationen erschienen, die die Herstellung spezieller Polyolefine mit solchen Katalysatorsystemen zum Gegenstand haben. Nachteilig ist jedoch in fast allen Fällen die Tatsache, dass zur Erzielung akzeptabler Produktivitäten ein hoher Überschuß an Alkylaluminoxanen, bezogen auf die Übergangsmetallkomponente, erforderlich ist (üblicherweise beträgt das Verhältnis Aluminium in Form des Alkylaluminoxans zu Übergangsmetall ca. 1000:1 - vgl. W. Kaminsky et al., Polyhedron, Vol. 7, No. 22/23 (1988) 2375 ff). Durch den hohen Preis der Alkylaluminoxane einerseits und durch in manchen Fällen erforderliche zusätzliche Polymer-Aufarbeitungsschritte ('deashing steps') andererseits wäre eine Polymerproduktion in technischem Maßstab auf Basis solcher Katalysatorsysteme vielfach unwirtschaftlich. Hinzu kommt, dass das für die Formulierung von Alkylaluminoxanen, insbesondere Methylaluminoxan, vielfach verwendete Lösungsmittel Toluol aus Gründen der Lagerstabilität der Formulierungen (starke Tendenz zur Gelbildung), sowie im Hinblick auf den Anwendungsbereich der letztendlich resuitierenden Polyolefine zunehmend unerwünscht ist.

Die EP-A-0 623 624 beschreibt ein Verfahren zur Herstellung von Aluminoxan, bei dem Wasser zu einer Lösung von Trialkylaluminium in einem aliphatischen, cycloaliphatischen oder aromatischen Kohlenwasserstoff zudosiert wird.

Eine signifikante Reduktion der benötigten Alkylaluminoxan-Menge im Bezug auf die Übergangsmetall-Komponente kann erreicht werden, indem Alkylaluminoxan auf inerte Trägermaterialien, bevorzugt SiO₂, aufgebracht wird (J. C. W. Chien, D. He, J. Polym. Science Part A, Polym. Chem., Vol. 29, 1603-1607 (1991)).

Solche geträgerten Materialien besitzen darüber hinaus den Vorteil der leichten Abtrennbarkeit bei Polymerisationen in kondensierter Phase (Herstellung hochreiner Polymerer) bzw. der Einsetzbarkeit als frei fließende Pulver in modernen Gasphasenprozessen, wobei die Kornmorphologie des Polymeren direkt durch die Partikelform des Trägers vorgegeben werden kann. Darüber hinaus sind trägerfixierte Alkylaluminoxane als trockene Pulver physikalisch stabiler als Lösungen mit vergleichbarem Al-Gehalt. Dies gilt insbesondere für Methylaluminoxan, das, wie bereits erwähnt, in toluolischer Lösung nach einer gewissen Lagerzeit zur Gelbildung neigt.

In der Literatur werden bereits einige Möglichkeiten beschrieben, Alkylaluminoxane auf Trägern zu fixieren.

Die EP 0 369 675 beschreibt ein Verfahren, in dem die Immobilisierung von Alkylaluminoxanen durch Umsetzung einer ca. 10-%igen Lösung von Trialkylaluminium in Heptan mit hydratisiertem Silica (8,7 Gew.-% H₂O) erreicht wird.

In der EP 0 442 725 wird ein Verfahren beschrieben, in dem die Immobilisierung durch Reaktion einer Toluol/Wasser-Emulsion mit einer ca. 7-%igen Lösung von Trialkylaluminium in Toluol in Gegenwart von Silica bei Temperaturen von -50 °C bis +80 °C bewirkt wird.

In der EP-A-0 567 952 wird ein geträgerter Polymerisationskatalysator beschrieben, enthaltend das Reaktionsprodukt
A) einer geträgerten Organoaluminiumverbindung, welche hergestellt wird durch
   (i) Herstellung einer Suspension eines Trägers mit weniger als 3 Gew.-% Wasser in einer Lösung von mindestens einer Alkylaluminiumverbindung unter inerten Bedingungen
   (ii) Hydrolyse der Suspension durch Zugabe von Wasser zu der Suspension und
B) einer Übergangsmetallverbindung als Katalysator.

Eine weitere Alternative eröffnet die US-PS 5 026 797 durch Umsetzung bereits vorgefertigter Alkylaluminoxan-Lösungen mit Silica (vorgetrocknet bei 600 °C) bei 60 °C und nachfolgende Auswaschung des nicht immobilisierten Alkylaluminoxan-Anteils durch Toluol.

Die US-PS 4 921 825 beschreibt ein Verfahren zur Immobilisierung von Alkylaluminoxan durch Fällung aus toluolischen Lösungen mittels n-Decan in Gegenwart von Silica.

Diese Verfahren sind teilweise technisch aufwendig, da sie u. a. zu Beginn niedrige Reaktionstemperaturen bzw. mehrstufige Aufarbeitungsprozesse und dadurch bedingte Ausbeuteverluste beinhalten oder die für eine hohe Katalysatoraktivität relevanten Beladungsgrade des Trägers mit Alkylaluminoxanen oftmals nicht erreicht werden können. Außerdem wird die Kornmorphologie des geträgerten Alkylaluminoxans wie auch des geträgerten Übergangsmetallkatalysators in unerwünschter Weise negativ verändert. Die Filtrations- und Trocknungsschritte führen teilweise zu einer Zerstörung des Trägerkorns, wodurch kleine Bruchteile (sogenannte 'Fines') entstehen, die bei der Polymerisation zu 'Reaktorfouling' führen können. Des weiteren weisen die nach diesen Verfahren hergestellten Alkylaluminoxane meist eine sehr breite Verteilung des Oligomerisationsgrads auf, was zu inhomogenen geträgerten Produkten führt.

Die EP 0 650 967 beschreibt ein Verfahren zur Immobilisierung von Alkylaluminoxanen auf Trägermaterialien, bei dem eine Dispersion von Alkylaluminoxanen, die durch Zudosierung von Wasser zu einer Lösung von Alkylaluminiumverbindungen in Kohlenwasserstoffen in einem statischen Mischer hergestellt wird, auf inerten Trägermaterialien fixiert wird. Nachteilig an diesem Verfahren ist, dass sich im Laufe des Verfahrens der Oligomerisationsgrad der gebildeten Alkylaluminoxane verändert, und so Alkylaluminoxan-Oligomere mit einer breiten Verteilung des Oligomerisationsgrads (Oligomere mit 1-20 Einheiten) erhalten werden (siehe auch EP 0 623 624). Die geträgerten Alkylaluminoxane weisen somit nicht die erwünschte homogene Beschaffenheit auf.

Eine Aufgabe der vorliegenden Erfindung war es daher, die Nachteile des Standes der Technik zu überwinden und ein Verfahren bereitzustellen, bei dem auf inerten Trägermaterialien immobilisierte Teilhydrolysate metallorganischer Verbindungen, insbesondere Alkylaluminoxane, in hoher Ausbeute und Homogenität in reproduzierbarer Weise erhalten werden. Das neue Verfahren soll gewährleisten, dass die Beladungsgrade in weiten Grenzen variiert werden können, dass die Kornmorphologie des Trägers erhalten bleibt und die Produkte letztlich als freifließende Pulver vorliegen. Mit dem neuen Verfahren sollen auf inerten Trägermaterialien immobilisierte Teilhydrolyseprodukte metallorganischer Verbindungen erhalten werden, deren Oligomerisationsgrad verfahrensspezifisch gezielt eingestellt werden kann.

Eine weitere Aufgabe der Erfindung bestand darin, ein Verfahren zur Herstellung von Teilhydrolyseprodukten metallorganischer Verbindungen, insbesondere Alkylaluminoxanen, bereitzustellen, bei dem Teilhydrolyseprodukte metallorganischer Verbindungen mit verfahrensspezifisch gezielt einstellbarem Oligomerisationsgrad einfach, effizient und in hoher Ausbeute hergestellt werden.

Gegenstand der Erfindung ist ein Verfahren zur Herstellung von auf Trägermaterialien immobilisierten Teilhydrolysaten metallorganischer Verbindungen, insbesondere Alkylaluminoxanen, welches dadurch gekennzeichnet ist, dass die metallorganischer Verbindungen und Wasser kontinuierlich in einen statischen Mischer in Gegenwart von Kohlenwasserstoffen zugegeben werden und die resultierenden Reaktionsprodukte mit Trägermaterialien in Kontakt gebracht werden. Die resultierenden Reaktionsprodukte können in Form von Lösungen oder Dispersionen anfallen, wie beispielsweise lyophile Dispersionen im Solzustand (vergleiche Römpp Chemie Lexikon, 9. Auflage, Georg Thieme Verlag Stuttgart, New York 1990, S. 2299 ff). Das erfindungsgemäße Verfahren zeichnet sich gegenüber dem Stand der Technik durch eine höhere Raum-Zeit-Ausbeute, höhere Homogenität der erhaltenen, auf inerten Trägermaterialien immobilisierten Teilhydrolysaten metallorganischer Verbindungen und einfachere Steuerung der Beladungsgrade aus. Das neue Verfahren ermöglicht die Herstellung von homogenen geträgerten Teilhydrolyseprodukten metallorganischer Verbindungen mit gezielt einstellbarem Oligomerisationsgrad und Konstitution, was aufgrund des Einflusses des Oligomerisationsgrads der Teilhydrolyseprodukte metallorganischer Verbindungen auf deren Aktivität als Cokatalysatoren bei der Polymerisation von größter Bedeutung ist. So zeigt sich gegenüber dem Stand der Technik bei Anwendung des erfindungsgemäßen Verfahrens eine engere Partikelgrößenverteilung des Polymeren. Diese wird bei Kontrolle der Molmasse bei der Polyethylen-Polymerisation durch Wasserstoffdosierung in einer dort immer zu beobachtenden, allerdings jetzt weniger ausgeprägten bimodalen Verteilung der Molmassen deutlich. Dieses Ergebnis impliziert, dass auch das zugrundeliegende Aluminoxan eine engere Molmassenverteilung aufweist.

Gegenstand der Erfindung ist auch ein Verfahren zur Herstellung von auf Trägermaterialien immobilisierten Übergangsmetallkatalysatoren, weiches dadurch gekennzeichnet ist, dass während oder gegebenenfalls nach dem vorstehend beschriebenen Verfahren eine oder mehrere Übergangsmetallverbindungen in fester oder gelöster Form zugegeben werden. Das erfindungsgemäße Verfahren zeichnet gegenüber dem Stand der Technik durch eine höhere Raum-Zeit-Ausbeute, grössere Homogenität der erhaltenen, auf inerten Trägermaterialien immobilisierten Übergangsmetallkatalysatoren und einfachere Steuerung der Beladungsgrade aus.

Ein weiterer Gegenstand der Erfindung ist ein Verfahren zur Herstellung von Teilhydrolyseprodukten metallorganischer Verbindungen, insbesondere Aluminoxane, welches dadurch gekennzeichnet ist, dass die metallorganischen Verbindungen und Wasser kontinuierlich in einen statischen Mischer in Gegenwart von Kohlenwasserstoffen zugegeben werden. Das erfindungsgemäße Verfahren zeichnet sich dadurch aus, dass es gegenüber dem Stand der Technik eine höhere Raum-Zeit-Ausbeute aufweist und die erhaltenen Teilhydrolyseprodukte metallorganischer Verbindungen einen gezielt einstellbaren Oligomerisationsgrad aufweisen.

Ein weiterer Gegenstand der Erfindung sind auf Trägermaterialien immobilisierten Teilhydrolyseprodukte metallorganischer Verbindungen, hergestellt nach dem erfindungsgemäßen Verfahren.

Gegenstand der Erfindung sind auch auf Trägermaterialien immobilisierten Übergangsmetallkatalysatoren, hergestellt gemäß dem erfindungsgemäßen Verfahren.

Ein weiterer Gegenstand der Erfindung sind die nach dem erfindungsgemäßen Verfahren hergestellten Teilhydrolyseprodukte metallorganischer Verbindungen, insbesondere Aluminoxane.

Weitere Gegenstände der Erfindung werden durch die Ansprüche gekennzeichnet.

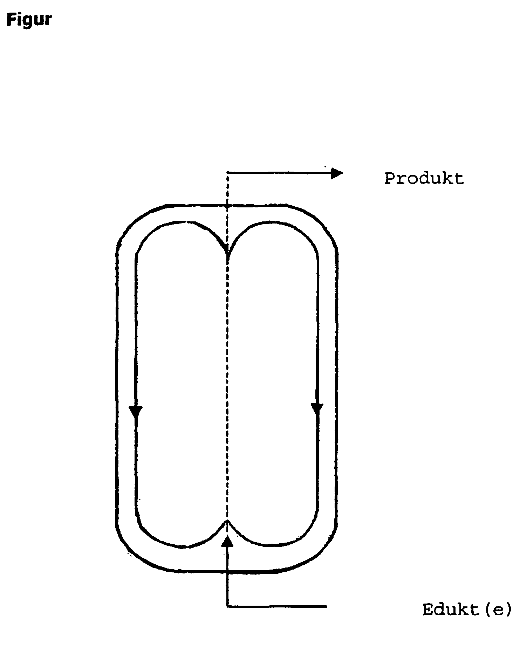

### Kurze Beschreibung der Figur

Die Figur zeigt eine schematische Abbildung eines Strömungsrohres mit Partialstromrückführung.

Erfindungsgemäß wird ein Verfahren zur Herstellung von auf Trägermaterialien immobilisierten Teilhydrolysaten metallorganischer Verbindungen bevorzugt, bei welchem Wasser und eine Lösung von metallorganischen Verbindungen in einem aliphatischen, cycloaliphatischen oder vorzugsweise aromatischen Kohlenwasserstoff über eine Mischdüse kontinuierlich in einen statischen Mischer, vorzugsweise ein Strömungsrohr mit koaxialer Partialstromrückführung, zugegeben werden und die resultierenden Lösungen oder Dispersionen mit inerten Trägermaterialien in Kontakt gebracht werden.

Als metallorganische Verbindungen sind prinzipiell alle auf diesem Gebiet üblichen Verbindungen verwendbar, welche mit Wasser zu Teilhydrolyseprodukten metallorganischer Verbindungen hydrolysiert werden können. Die Hydrolyseprodukte sind erfindungsgemäß Lösungen oder Dispersionen. Bevorzugt handelt es sich bei den metallorganischen Verbindungen um magnesium-, zink- oder aluminiumorganische Verbindungen. Bevorzugter werden gemischte oder ungemischte alkyl-, aryl- oder gemischt substituierte alkaryl- oder unsubstituierte alkaryl- Aluminiumverbindungen verwendet. Erfindungsgemäß bevorzugt sind Trialkylaluminiumverbindungen mit kurzkettigen Alkylresten (C₁-C₄). Besonders bevorzugt ist Trimethylaluminium.

Wird das erfindungsgemäße Verfahren mit aluminiumorganischen Verbindungen als Reaktanden durchgeführt, so entstehen als Reaktionsprodukte aluminiumorganische Teilhydrolysate. Bevorzugt entstehen als Teilhydrolyseprodukte Lösungen oder Dispersionen von Aluminoxanen, besonders bevorzugt Dispersionen von Aluminoxanen. Im Rahmen der Erfindung entstehen als Teilhydrolyseprodukte von Trimethylaluminium bevorzugt Dispersionen von Methylaluminoxanen, die eine gezielt einstellbare Konstitution aufweisen.

Unter kontinuierlicher Zugabe wird im Rahmen der vorliegenden Erfindung eine kontinuierliche, duale, gleichzeitige oder zeitlich unabhängige Dosierung der beiden Reaktanden metallorganische Verbindungen und Wasser verstanden.

Gemäß einer weiteren Ausführungsform der Erfindung ist das Verfahren durch kontinuierliche, gleichzeitige Zugabe (Dosierung) von Wasser und metallorganischen Verbindungen in Form einer dualen Dosierung zu einem reinen Kohlenwasserstofflösungsmittel als Lösungsmedium gekennzeichnet. Die Zugabe von metallorganischer Verbindung kann gegebenenfalls gleichzeitig oder zeitlich versetzt erfolgen. Bevorzugt werden die Alkylaluminiumverbindungen als Lösungen in Kohlenwasserstoffen zugegeben.

Das Trägermaterial kann bereits während der Herstellung der Lösung oder Dispersion in der Mischung vorliegen oder aber auch nach Herstellung der Lösung oder Dispersion mit dieser in Kontakt gebracht werden oder auch synchron mit dieser Lösung oder Dispersion dosiert werden.
Die kontinuierliche duale Dosierung ermöglicht die genaue Einstellung des gewünschten Hydrolysegrads, wodurch eine optimale Steuerung des Oligomerisationsgrads und optimale Trägerung und Trägerfixierung der Teilhydrolysate metallorganischer Verbindungen erreicht werden können.

Die Funktionsweise des Reaktors (Figur), wie er beispielsweise in DE-A-25 16 284 beschrieben wird, beruht auf einem Flüssigkeitstreibstrahl im Innenrohr, der dem gesamten Reaktorinhalt einen Impuls überträgt und damit eine hohe Umlaufströmung erzeugt. Hierdurch ist der Flüssigkeitsumlaufstrom im Reaktor ca. 8 bis 10fach höher als der Treibstrahlvolumenstrom.

In dem erfindungsgemäßen Verfahren wird in einem Volumenstromverhältnis von 1 : 2000 bis 1 : 40'000, vorzugsweise 5000 - 20'000, über die Ein- oder Mehrkomponentenmischdüse Wasser und die metallorganischen Verbindungen, bevorzugt Trialkylaluminium, in das Strömungsrohr mit koaxialer Partialstromrückführung dosiert.

Das molare Verhältnis von Wasser zu Alkylaluminium-verbindungen bei der Reaktion liegt im Bereich von 0,5 - 1,3 : 1, vorzugsweise 0,6 - 0,9 : 1.

Das Strömungsrohr mit koaxialer Partialstromrückführung sorgt wegen der hohen Umlaufströmung für eine gute und extrem schnelle Vermischung der metallorganischen Verbindungen, bevorzugt Aluminiumalkylverbindung, mit Wasser. Aufgrund der hohen Primärdispergierung kann eine lokal zu hohe Konzentration an Wasser vermieden werden, die ansonsten zu Ausbeuteverlusten bedingt durch die Bildung von Aluminiumhydroxid einerseits und unerwünscht hohem Anteil an nichtumgesetztem Aluminiumtrialkyl andererseits, führt. Außerdem kann durch das kleine Reaktorvolumen die hohe Reaktionswärme der Umsetzung schnell und gefahrlos abgeführt werden.

Der mittlere Oligomerisationsgrad n, der in der mittleren Molmasse des Reaktionsproduktes zum Ausdruck kommt, kann durch geeignete Dosierung der Reaktionspartner und Steuerung der Reaktionsparameter gezielt beeinflußt werden. Erfindungsgemäß kann der Oligomerisationsgrad in einem sehr breiten Bereich gezielt eingestellt werden, was einen deutlichen Einfluss auf die Konstitution der Teilhydrolysate hat, die sich damit durch hohe Homogenität auszeichnen. Dadurch kann eine enge Verteilung des Oligomerisationsgrads erzielt werden. Im Rahmen der erfindungsgemäßen Verfahrens kann das Molverhältnis H₂O/Aluminiumtrialkyl, insbesondere auch bei TMA, auf den gewünschten Wert eingestellt werden. Dies ist von besonderer Bedeutung, da die Aktivität von Aluminoxanen als Cokatalysator in der Olefinpolymerisation offenbar vom Oligomerisationsgrad und der Konstitution des verwendeten Aluminoxans abhängig ist (W. Kaminsky, Nachr. Chem. Tech. Lab. 29, 373-7 (1981); W. Kaminsky et.al., Makromol. Chem., Macromol. Symp. 3, 377-87 (1986)).

Als erfindungsgemäß verwendbare Trägermaterialien werden die porösen Oxide eines oder mehrerer der Elemente der Gruppen II, III oder IV des Periodensystems wie Silica, ZrO₂, TiO₂, B₂O₃, CaO, ZnO, BaO, Zeolithe, Bentonithe, vorzugsweise Al₂O₃, Alumina und MgO und besonders bevorzugt SiO₂, aber auch Polymere eingesetzt.

Diese Trägermaterialien können Korngrößen im Bereich von 1 - 300 µm, vorzugsweise 10 - 200 µm, aufweisen; Oberflächen von 10 - 800 m²/g, insbesondere 100 - 500 m²/g; N₂-Porenvolumina von 0,5 - 7 cm³, vorzugsweise 1 - 2 cm³.

Diese Träger sind handelsübliche Materialien, welche die angegebenen Werte in statistischer Verteilung enthalten.

Der Wassergehalt der Trägermaterialien sollte < 10 Gew.-%, vorzugsweise < 6 Gew.-% und insbesondere < 1 Gew.-%, sein. Im Bedarfsfalle werden die handelsüblichen Trägermaterialien daher vor der Anwendung bei Temperaturen von 50 - 1000 °C, vorzugsweise 100 - 500 °C, 2 - 20 Stunden, gegebenenfalls bei reduziertem Druck, getrocknet.

Die Aufbringung und Fixierung resp. Immobilisierung der Teilhydrolysate metallorganischer Verbindungen auf die Trägermaterialien erfolgt entweder in einem zweiten Reaktorgefäß, in dem das Trägermaterial als Suspension oder Filterkuchen vorliegt und durch das die im Strömungsrohr mit koaxialer Partialstromrückführung gebildete Lösung oder Dispersion unter gleichzeitiger Homogenisierung der Mischung hindurchgeleitet wird, oder durch Synthese der Lösung oder Dispersion direkt in Gegenwart des Trägers. Aus diesen Mischungen wird dann das Lösungsmittel, gegebenenfalls unter vermindertem Druck und/oder Filtration, entfernt.

Die ursprüngliche Kornmorphologie des Trägermaterials wird durch diese Vorgehensweise nicht verändert.

Das Verhältnis von Träger zu Aluminoxan ist innerhalb relativ weiter Grenzen variierbar, erfindungsgemäß wird es so gewählt, dass auf dem resultierenden freifließenden Pulver aus Trägermaterial und Aluminoxan 5 - 40 Gew.-%, vorzugsweise 8 - 25 Gew.-% Aluminium, in Form von Aluminoxanen vorliegen (siehe Beispiele).

Das erfindungsgemäße Verfahren ermöglicht die Herstellung von geträgerten Aluminoxanen mit nahezu quantitativen Ausbeuten an immobilisiertem Aluminium, bezogen auf eingesetzte Trialkylaluminiumverbindungen, ohne technisch aufwendige Verfahrensschritte. Aufgrund gezielt einstellbarer Parameter und reproduzierbarer Verfahrensbedingungen weisen die nach dem erfindungsgemäßen Verfahren hergestellten Cokatalysatoren resp. geträgerten Teilhydrolysate metallorganischer Verbindungen, die ebenfalls ein Gegenstand der vorliegenden Erfindung sind, insbesondere Alkylaluminoxane und besonders bevorzugt das Methylaluminoxan, hohe Homogenität und hohe Aktivitäten als Cokatalysatoren auf und sind somit hervorragend geeignet für die weitere Herstellung von Katalysator-Systemen für die Olefinpolymerisation.

Teil der Erfindung ist auch ein Verfahren zur Herstellung von auf Trägermaterialien immobilisierten Übergangsmetall-katalysatoren, welches dadurch gekennzeichnet ist, dass während oder gegebenenfalls nach dem vorstehend beschriebenen Verfahren eine oder mehrere Übergangsmetallverbindungen in fester oder gelöster Form zugegeben werden.

Als Übergangsmetallverbindungen sind prinzipiell alle auf diesem Gebiet üblichen Verbindungen verwendbar. Bevorzugt seien hier Verbindungen der Metalle der Gruppe IVa des Periodensystems der chemischen Elemente genannt. Darunter fallen auch sogenannte Sandwich- und Halbsandwich-Komplexe.
Diese Übergangsmetallverbindungen besitzen mono-, bi- oder polycyclische Liganden wie beispielsweise Cyclopentadienyl-, Indenyl, Fluorenyl, die substituiert oder unsubstituiert sein können. Die Übergangsmetallverbindungen können als Alkylverbindungen, als Halogenidverbindungen, als Aryl- oder Alkarylverbindungnen oder auch als Alkoxyverbindungen eingesetzt werden.
Bei der Zudosierung der Übergangsmetallverbindungen in gelöster Form sind insbesondere gesättigte, ungesättigte oder halogenhaltige Kohlenwasserstoffe als Lösungsmittel geeignet. Das Molverhältnis von Übergangsmetallverbindung zu Aluminium in Form von Aluminoxan beträgt etwa 1:10 bis 1:1000, bevorzugt 1:50 bis 1:200.

Dieses Verfahren gemäß der Erfindung ermöglicht die Herstellung von geträgerten Übergangsmetallkatalysatoren ohne technisch aufwendige Verfahrensschritte. Aufgrund gezielt einstellbarer Parameter und reproduzierbarer Verfahrensbedingungen weisen diese mit dem erfindungsgemäßen Verfahren hergestellten geträgerten Übergangsmetallkatalysatoren, die ebenfalls Teil der Erfindung sind, hohe Aktivitäten und Produktivitäten bei der Olefinpolymerisation auf.

Teil der Erfindung ist auch das Verfahren zur Herstellung von Teilhydrolysaten metallorganischer Verbindungen, insbesondere Alkylaluminoxanen, welches dadurch gekennzeichnet ist, dass metallorganischer Verbindungen, insbesondere Alkylaluminiumverbindungen, und Wasser kontinuierlich in einen statischen Mischer in Gegenwart von Kohlenwasserstoffen zugegeben werden, sowie die nach diesem Verfahren herstellbaren Produkte. Die bevorzugten Ausführungsformen dieses Verfahrens wurden obenstehend im Zusammenhang mit dem Verfahren zur Herstellung von auf Trägermaterialien immobilisierten Teilhydrolysaten metallorganischer Verbindungen, insbesondere Alkylaluminoxanen, bereits ausführlich diskutiert.

Im folgenden wird die Erfindung anhand von Beispielen näher erläutert.
Die nachfolgenden Beispiele geben das allgemeine Anwendungsgebiet der vorliegenden Erfindung wieder und sind nicht einschränkend zu verstehen.
Prozentangaben sind, soweit nicht anders angeben als Massenprozente zu verstehen.

### Beispiele

### Beispiel 1:

3,5 kg Trimethylaluminium und 0,608 kg Wasser werden simultan in ein Strömungsrohr mit koaxialer Partialstromrückführung dosiert. Als Lösungsmittel werden 185 kg Toluol verwendet. Die Dosierraten betragen für Trimethylaluminium 0,875 kg/h und für Wasser 0,152 kg/h. Während der Dosierzeit von vier Stunden wird die entstehende Dispersion im Kreislauf gefahren. Danach wird die Dispersion in ein Reaktor mit 5,50 kg SiO₂ gegeben und ca. 1 h gerührt. Das Lösungsmittel wird durch Filtration und Trocknung im Vakuum entfernt.
Ausbeute: 8,1 kg
Aluminiumgehalt: 15,8 Gew.-%
Methyl-Aluminium-Verhältnis: 1,25

### Beispiel 2:

Es wird analog wie in Beispiel 1 verfahren. Nach Entfernung des Lösungsmittels durch Filtration wird jedoch das Endprodukt noch zusätzlich mit einer Suspension von 0,162 kg Et[H₄Ind]₂ZrCl₂ in 125 kg Toluol behandelt. Nach erneuter Filtration erfolgt die Trocknung im Vakuum.
Ausbeute: 8,3 kg
Aluminiumgehalt: 15,4 Gew.-%
Zircongehalt: 0,42 Gew.-%
Methyl-Aluminium-Verhältnis: 1,25

### Beispiel 3:

6,0 kg Trimethylaluminium und 1,044 kg Wasser werden simultan in ein Strömungsrohr mit koaxialer Partialstromrückführung dosiert. Als Lösungsmittel werden 185 kg Toluol verwendet. Die Dosierraten betragen für Trimethylaluminium 1,0 kg/h und für Wasser 0,174 kg/h. Ansonsten wird analog wie in Beispiel 1 verfahren.
Ausbeute: 9,7 kg
Aluminiumgehalt: 22,5 Gew.-%
Methyl-Aluminium-Verhältnis: 1,40

### Beispiel 4:

Es wird analog wie in Beispiel 3 verfahren. Nach Entfernung des Lösungsmittels durch Filtration wird jedoch das Endprodukt noch zusätzlich mit einer Suspension von 0,407 kg Et[H₄Ind]₂ZrCl₂ in 125 kg Toluol behandelt. Nach erneuter Filtration erfolgt die Trocknung im Vakuum.
Ausbeute: 10,1 kg
Aluminiumgehalt: 21,6 Gew.-%
Zircongehalt: 0,86 Gew.-%
Methyl-Aluminium-Verhältnis: 1,40

### Beispiel 5:

Zunächst wird wie im Beispiel 1 verfahren. Während der Dosierung wird jedoch nach jeder Stunde 1,4 kg SiO₂ portionsweise in den Dispersionskreislauf gegeben. Das Produkt wird danach noch ca. 1 h gerührt, filtriert und im Vakuum getrocknet. Ausbeute: 8,3 kg
Aluminiumgehalt: 15,4 Gew.-%
Methyl-Aluminium-Verhältnis: 1,15

### Beispiel 6:

5,50 kg SiO₂ werden in 185 kg Toluol in einem Kreislaufsystem vorgelegt. 3,5 kg Trimethylaluminium und 0,614 kg Wasser werden simultan in ein Strömungsrohr mit koaxialer Partialstromrückführung dosiert, welches in dem Kreislaufsystem integriert ist. Die Dosierraten betragen für Trimethylaluminium 3,5 kg/h und für Wasser 0,614 kg/h. Während der Dosierzeit von einer Stunde wird die entstehende Dispersion im Kreislauf gefahren. Danach wird die Dispersion in ein Reaktor gegeben und ca. 1 h gerührt. Das Lösungsmittel wird durch Filtration und Trocknung im Vakuum entfernt. Ausbeute: 6,2 kg
Aluminiumgehalt: 12,7 Gew.-%
Methyl-Aluminium-Verhältnis: 1,10

### Beispiel 7:

105 kg Toluol werden in einem Kreislaufsystem vorgelegt. 6,8 kg SiO₂, 3,7 kg Trimethylaluminium und 0,593 kg Wasser werden mittelbar bzw. unmittelbar simultan in ein Strömungsrohr mit koaxialer Partialstromrückführung dosiert, welches in dem Kreislaufsystem integriert ist. Die Dosierraten betragen für SiO₂ 6,8 kg/h, für Trimethylaluminium 3,7 kg/h und für Wasser 0,593 kg/h. Während der Dosierzeit von einer Stunde wird die entstehende Dispersion im Kreislauf gefahren. Danach wird wie im Beispiel 6 verfahren.
Mit diesem Beispiel konnte gegenüber Beispiel 5 eine Verbesserung des Endproduktes bezüglich der Kornmorphologie und Homogenität des Produktes erhalten werden.
Ausbeute: 8,6 kg
Aluminiumgehalt: 10,8 Gew.-%
Methyl-Aluminium-Verhältnis: 1,25

## Patentansprüche

1. Verfahren zur Herstellung von auf Trägermaterialien immobilisierten Teilhydrolysaten metallorganischer Verbindungen, **dadurch gekennzeichnet, dass** die metallorganischen Verbindungen und Wasser kontinuierlich in einen statischen Mischer in Gegenwart von Kohlenwasserstoffen zugegeben werden und die resultierenden Reaktionsprodukte mit Trägermaterialien in Kontakt gebracht werden.

2. Verfahren nach Anspruch 1, **dadurch gekennzeichnet, dass** als Reaktionsprodukte Lösungen oder Dispersionen von Teilhydrolysaten metallorganischer Verbindungen entstehen.

3. Verfahren nach Anspruch 1 oder 2, **dadurch gekennzeichnet, dass** als metallorganische Verbindungen magnesium-, zink- oder aluminiumorganische Verbindungen verwendet werden.

4. Verfahren nach einem der Ansprüche 1 bis 3, **dadurch gekennzeichnet, dass** als metallorganische Verbindungen gemischte oder ungemischte alkyl-, aryl- oder gemischt substituierte alkaryl- oder unsubstituierte alkaryl- Aluminiumverbindungen verwendet werden.

5. Verfahren nach einem der Ansprüche 1 bis 4, **dadurch gekennzeichnet, dass** als Teilhydrolyseprodukte aluminiumorganischer Verbindungen Aluminoxane entstehen.

6. Verfahren nach Anspruch 5, **dadurch gekennzeichnet, dass** Lösungen oder Dispersionen von Aluminoxanen entstehen.

7. Verfahren nach einem der Ansprüche 4 bis 6, **dadurch gekennzeichnet, dass** als Teilhydrolyseprodukte von Trimethylaluminium Lösungen oder Dispersionen von Methylaluminoxanen entstehen.

8. Verfahren nach Anspruch 7, **dadurch gekennzeichnet, dass** Methylaluminoxane mit gezielt eingestellter Konstitution entstehen.

9. Verfahren nach einem der Ansprüche 1 bis 8, **dadurch gekennzeichnet, dass** als statischer Mischer ein Strömungsrohr mit koaxialer Partialstromrückführung verwendet wird.

10. Verfahren nach einem der Ansprüche 1 bis 9, **dadurch gekennzeichnet, dass** das Verfahren in Gegenwart aromatischer Kohlenwasserstoffe durchgeführt wird.

11. Verfahren gemäß einem der Ansprüche 1 bis 10, **dadurch gekennzeichnet, dass** Wasser und Aluminiumalkylverbindungen im molaren Verhältnis von 0,5 - 1,3 : 1, vorzugsweise 0,6 - 0,9 : 1, eingesetzt werden.

12. Verfahren gemäß einem der Ansprüche 1 bis 11, **dadurch gekennzeichnet, dass** die Alkylaluminiumverbindungen als Lösungen in Kohlenwasserstoffen zugegeben werden.

13. Verfahren nach einem der Ansprüche 1 bis 12, **dadurch gekennzeichnet, dass** als Trägermaterialien poröse Feststoffe mit einer Oberfläche von 100-800 m² und einem Porenvolumen von 0,5 bis 7 cm³ eingesetzt werden.

14. Verfahren gemäß Anspruch 13, **dadurch gekennzeichnet, dass** als poröse Feststoffe SiO₂, Zeolithe, Alumina, Polymere oder Bentonithe, vorzugsweise Silica, gegebenenfalls mit einem Wassergehalt < 10 Gew.-%, vorzugsweise < 6 Gew.-% eingesetzt wird.

15. Verfahren gemäß einem der Ansprüche 1 bis 14, **dadurch gekennzeichnet, dass** die Zugabe von metallorganischer Verbindung gegebenenfalls gleichzeitig oder zeitlich versetzt erfolgt.

16. Verfahren gemäß einem der Ansprüche 1 bis 15, **dadurch gekennzeichnet, dass** auf dem Trägermaterial 5 - 40 Gew.-%, vorzugsweise 8 - 25 Gew.-% Aluminium in Form von Aluminoxanen fixiert ist.

17. Verfahren gemäß einem der Ansprüche 1 bis 16, **dadurch gekennzeichnet, dass** das Trägermaterial bereits während der Herstellung der Lösung oder Dispersion in der Mischung vorliegt.

18. Verfahren gemäß einem der Ansprüche 1 bis 17, **dadurch gekennzeichnet, dass** das Trägermaterial nach Herstellung der Lösung oder Dispersion mit dieser in Kontakt gebracht wird.

19. Verfahren zur Herstellung von auf Trägermaterialien immobilisierten Übergangsmetallkatalysatoren, **dadurch gekennzeichnet, dass** während oder gegebenenfalls nach einem Verfahren gemäß einem der Ansprüche 1 bis 18 eine oder mehrere Übergangsmetallverbindungen in fester oder gelöster Form zugegeben werden.

20. Verfahren nach Anspruch 19, **dadurch gekennzeichnet, dass** als Übergangsmetallverbindungen ein oder mehrere Metallocenkomplexe eingesetzt werden.

21. Verfahren zur Herstellung von Teilhydrolyseprodukten metallorganischer Verbindungen, **dadurch gekennzeichnet, dass** die metallorganischen Verbindungen und Wasser kontinuierlich in einen statischen Mischer in Gegenwart von Kohlenwasserstoffen zugegeben werden.

22. Verfahren nach Anspruch 21, **dadurch gekennzeichnet, dass** als metallorganische Verbindung magnesium-, zink- oder aluminiumorganische Verbindungen eingesetzt werden.

23. Verfahren nach Anspruch 22, **dadurch gekennzeichnet, dass** als metallorganische Verbindungen Trialkylaluminiumverbindungen eingesetzt werden.

## Claims

1. Process for preparing partial hydrolysates of organometallic compounds immobilized on support materials, **characterized in that** the organometallic compounds and water are continuously introduced into a static mixer in the presence of hydrocarbons and the resulting reaction products are brought into contact with support materials.

2. Process according to Claim 1, **characterized in that** solutions or dispersions of partial hydrolysates or organometallic compounds are formed as reaction products.

3. Process according to Claim 1 or 2, **characterized in that** organomagnesium, organozinc or organoaluminium compounds are used as organometallic compounds.

4. Process according to any of Claims 1 to 3, **characterized in that** mixed or unmixed alkyl-, aryl- or mixed-substituted alkaryl- or unsubstituted alkaryl-aluminium compounds are used as organometallic compounds.

5. Process according to any of Claims 1 to 4, **characterized in that** aluminoxanes are formed as partial hydrolysis products of organoaluminium compounds.

6. Process according to Claim 5, **characterized in that** solutions or dispersions of aluminoxanes are formed.

7. Process according to any of Claims 4 to 6, **characterized in that** solutions or dispersions of methylaluminoxanes are formed as partial hydrolysis products of trimethylaluminium.

8. Process according to Claim 7, **characterized in that** methylaluminoxanes having a specifically set constitution are formed.

9. Process according to any of Claims 1 to 8, **characterized in that** the static mixer used is a flow tube with coaxial

10. Process according to any of Claims 1 to 9, **characterized in that** the process is carried out in the presence of

11. Process according to any of Claims 1 to 10, **characterized in that** water and aluminium alkyl compounds are used in a molar ratio of 0.5-1.3:1, preferably 0.6-0.9:1.

12. Process according to any of Claims 1 to 11, **characterized in that** the alkylaluminium compounds are introduced as solutions in hydrocarbons.

13. Process according to any of Claims 1 to 12, **characterized in that** porous solids having a surface area of 100-800 m² and a pore volume of from 0.5 to 7 cm³ are used as support materials.

14. Process according to Claim 13, **characterized in that** SiO₂, zeolites, alumina, polymers or bentonites, preferably silica, if desired having a water content of < 10% by weight, preferably < 6% by weight, are used as porous solids.

15. Process according to any of Claims 1 to 14, **characterized in that** the introduction of the organometallic compound may be carried out simultaneously or offset in time.

16. Process according to any of Claims 1 to 15, **characterized in that** 5-40% by weight, preferably 8-25% by weight, of aluminium in the form of aluminoxanes is immobilized on the support material.

17. Process according to any of Claims 1 to 16, **characterized in that** the support material is present in the mixture during the preparation of the solution or dispersion.

18. Process according to any of Claims 1 to 17, **characterized in that** the support material is brought into contact with the solution or dispersion after the latter has been prepared.

19. Process for preparing transition metal catalysts immobilized on support materials, **characterized in that** one or more transition metal compounds are added in solid or dissolved form during or, if desired, after a process according to any of Claims 1 to 18.

20. Process according to Claim 19, **characterized in that** one or more metallocene complexes is/are used as transition metal compounds.

21. Process for preparing partial hydrolysis products of organometallic compounds, **characterized in that** the organometallic compounds and water are introduced continuously into a static mixer in the presence of hydrocarbons.

22. Process according to Claim 21, **characterized in that** organomagnesium, organozinc or organoaluminium compounds are used as organometallic compound.

23. Process according to Claim 22, **characterized in that** trialkylaluminium compounds are used as organometallic compounds.

## Revendications

1. Procédé pour la préparation d'hydrolysats partiels, immobilisés sur des matières de support, de composés organométalliques, **caractérisé en ce qu'**on introduit en continu les composés organométalliques et de l'eau dans un mélangeur statique en présence d'hydrocarbures et les produits de réaction résultants sont mis en contact avec des matières de support.

2. Procédé selon la revendication 1, **caractérisé en ce que** des solutions ou dispersions d'hydrolysats partiels de composés organométalliques se forment en tant que produits de réaction.

3. Procédé selon la revendication 1 ou 2, **caractérisé en ce qu'**on utilise en tant que composés organométalliques des composés organomagnésiens, -zinciques ou aluminiques.

4. Procédé selon l'une quelconque des revendications 1 à 3, **caractérisé en ce qu'**on utilise en tant que composés organométalliques des composés alkyl-, arylaluminiques mélangés ou non mélangés ou alkarylaluminiques non substitués ou alkarylaluminiques substitués mélangés.

5. Procédé selon l'une quelconque des revendications 1 à 4, **caractérisé en ce que** des aluminoxanes sont formés en tant que produits d'hydrolyse partielle de composés organoaluminiques.

6. Procédé selon la revendication 5, **caractérisé en ce qu'**il se forme des solutions ou dispersions d'aluminoxanes.

7. Procédé selon l'une quelconque des revendications 4 à 6, **caractérisé en ce que** des solutions ou dispersions de méthylaluminoxanes sont formées en tant que produits d'hydrolyse partielle de triméthylaluminium.

8. Procédé selon la revendication 7, **caractérisé en ce qu'**il se forme des méthylaluminoxanes à constitution ajustée dans un but précis.

9. Procédé selon l'une quelconque des revendications 1 à 8, **caractérisé en ce qu'**on utilise en tant que mélangeur statique un tube à écoulement à recyclage partiel de courant coaxial.

10. Procédé selon l'une quelconque des revendications 1 à 9, **caractérisé en ce que** le procédé est effectué en présence d'hydrocarbures aromatiques.

11. Procédé selon l'une quelconque des revendications 1 à 10, **caractérisé en ce qu'**on utilise de l'eau et des composés alkylaluminiques en un rapport molaire allant de 0,5:1 à 1,3:1, de préférence de 0,6:1 à 0,9:1.

12. Procédé selon l'une quelconque des revendications 1 à 11, **caractérisé en ce que** les composés alkylaluminiques sont introduits sous forme de solutions dans des hydrocarbures.

13. Procédé selon l'une quelconque des revendications 1 à 12, **caractérisé en ce qu'**on utilise en tant que matières de support des matières solides poreuses ayant une surface de 100-800 m² et un volume de pores de 0,5 à 7 cm³.

14. Procédé selon la revendication 13, **caractérisé en ce qu'**on utilise en tant que matières solides poreuses SiO₂, des zéolithes, de l'alumine, des polymères ou des bentonites, de préférence de la silice, ayant éventuellement une teneur en eau < 10 % en poids, de préférence < 6 % en poids.

15. Procédé selon l'une quelconque des revendications 1 à 14, **caractérisé en ce que** l'introduction du composé organométallique s'effectue éventuellement simultanément ou de façon décalée dans le temps.

16. Procédé selon l'une quelconque des revendications 1 à 15, **caractérisé en ce que** 5-40 % en poids, de préférence 8-25 % en poids d'aluminium sous forme d'aluminoxanes sont fixés sur la matière de support.

17. Procédé selon l'une quelconque des revendications 1 à 16, **caractérisé en ce que** la matière de support est déjà présente dans le mélange pendant la préparation de la solution ou dispersion.

18. Procédé selon l'une quelconque des revendications 1 à 17, **caractérisé en ce que** la matière de support, après la préparation de la solution ou dispersion, est mise en contact avec celle-ci.

19. Procédé pour la préparation de catalyseurs à métaux de transition immobilisés sur des matières de support, **caractérisé en ce que** pendant ou éventuellement après un processus selon l'une quelconque des revendications 1 à 18, on ajoute un ou plusieurs composés contenant des métaux de transition, sous forme solide ou dissoute.

20. Procédé selon la revendication 19, **caractérisé en ce qu'**on utilise en tant que composés contenant des métaux de transition un ou plusieurs complexes métallocène.

21. Procédé pour la préparation de produits d'hydrolyse partielle de composés organométalliques, **caractérisé en ce qu'**on introduit en continu les composés organométalliques et de l'eau dans un mélangeur statique en présence d'hydrocarbures.

22. Procédé selon la revendication 21, **caractérisé en ce qu'**on utilise en tant que composé organométallique des composés organomagnésiens, -zinciques ou aluminiques.

23. Procédé selon la revendication 22, **caractérisé en ce qu'**on utilise en tant que composés organométalliques des composés trialkylaluminiques.
